# FASCICULE DE BREVET EUROPEEN

(11) **EP 2 495 606 B1**
(45) Date de publication et mention de la délivrance du brevet: **11.01.2017**
(21) Numéro de dépôt: 12158134.2
(22) Date de dépôt: 05.03.2012
(51) Int. Cl.: G02C 5/14

(54) **Monture de lunettes à branche clipée**
Brillengestell mit clip-befestigtem Bügel
Spectacle frame with clipped temple

(30) Priorité: 03.03.2011 FR 1151736
(43) Date de publication de la demande: 05.09.2012
(73) Titulaire: Minima, 91310 Linas (FR)
(72) Inventeur: Perie, Jean-Claude, 82000 Montauban (FR); Zoonens, Charles, 28260 Rouvres (FR)
(74) Mandataire: Lavialle, Bruno François Stéphane

(56) Documents cités:
- EP-A1- 2 116 887
- WO-A1-2008/125743
- US-A1- 2005 094 093

## Description

La présente invention concerne une monture de lunettes comportant des éléments de monture clipés et par exemple une branche clipée.

Une monture de lunettes comporte généralement des tenons dont sont solidaires des branches, les tenons et les branches formant des éléments de monture. Les tenons comportent une première portion d'extrémité fixée au verre et une deuxième portion d'extrémité opposée dans le prolongement de laquelle s'étend la branche. Les deux portions d'extrémité du tenon sont généralement articulées l'une à l'autre par une charnière permettant le pivotement de la branche entre une position de rangement dans laquelle la branche s'étend parallèlement aux verres et une position d'utilisation dans laquelle la branche s'étend perpendiculairement aux verres.

Il existe des montures dans laquelle la branche est d'une seule pièce avec la deuxième portion d'extrémité, la liaison de la branche au tenon se faisant au niveau de la charnière et des montures dans lesquelles la branche est rapportée sur la deuxième portion. Dans ce deuxième cas, différents modes de fixation sont employés comme le collage, le vissage, le sertissage, le brasage... Ces modes de fixation sont relativement résistants mais impose des contraintes de montage qui rendent nécessaire l'utilisation d'un outillage spécifique.

Par ailleurs, avec le temps, les lunettes ont été peu à peu débarrassées de leur seule image de prothèse optique pour revêtir également celle d'un accessoire de mode à part entière dont on attend qu'il habille le visage de leur porteur. En parallèle s'est développée une offre très importante de formes et de couleurs de lunettes. Cette multiplicité de formes et de couleurs incite les porteurs de lunettes à disposer de plusieurs types de lunettes pour leur permettre de coordonner leurs lunettes en fonction de leurs envies ou de leurs vêtements. Le prix des verres correcteurs limite toutefois la possibilité de disposer de plusieurs paires de lunettes adaptées à sa vue.

Pour remédier à cet inconvénient, il a été imaginé de disposer de plusieurs montures pour une seule paire de verres. Toutefois, l'outillage et le savoir-faire nécessaires interdisent au particulier le montage des verres dans les montures voire-même uniquement le montage des différents composants des montures elles-mêmes.

Il a donc été envisagé de pouvoir fixer des organes décoratifs sur la monture elle-même et sur les branches en particulier. La fixation est réalisée par clipage (encliquetage ou pincement élastique) et les organes décoratifs sont réalisés en matière plastique. Ces organes et ce mode de fixation n'ont cependant pas un aspect flatteur et s'accordent difficilement d'un montage sur des montures fines.

En parallèle, il a également été envisagé d'emmancher à force la branche dans un logement du tenon selon un sens d'introduction parallèle à la direction longitudinale de la branche pour simplifier la fabrication des montures de lunettes. On aurait pu imaginer de fournir plusieurs branches interchangeables fixées par ce moyen. Cependant, dans ce mode de clipage, le pincement élastique résultant du clipage est effectué selon une direction transversale à la branche de sorte que l'effort de pincement doit être élevé pour assurer la retenue et le maintien en position sans jeu de la branche sur le tenon. L'utilisateur devrait donc développer un effort important dans la direction d'engagement tant pour monter la branche sur le tenon que pour l'ôter de celui-ci.

Il est connu du document EP-A1-2 116 887 de pouvoir relier une branche à un tenon par clipage. Le tenon comprend une butée élastique du côté d'un axe de charnière et un crochet à l'opposé. La branche possède une extrémité conformée pour épouser la forme de la butée élastique et est pourvue d'une ouverture pour y recevoir le crochet. La branche est montée en introduisant d'abord le crochet dans l'ouverture puis en ramenant l'extrémité conformée contre la butée élastique. Ce mode de fixation est soumis, lors de la manipulation des branches, à des sollicitations relativement importantes qui risquent de faire céder le montage.

Un but de l'invention est de proposer une monture de lunettes à éléments interchangeables par leur porteur facilement et de manière fiable.

A cet effet, on prévoit, une monture de lunettes selon la revendication 1.

Ainsi, la contre-platine, qui a par exemple la forme d'une plaque découpée, est emprisonnée entre deux butées de la platine. On comprend que la mise en place de la contre-platine sur la platine est réalisée en mettant la contre-platine en butée contre la première butée puis en forçant la contre-platine contre la platine en amenant la deuxième butée dans son état de libération en s'opposant à l'effort exercé par la deuxième butée qui, une fois revenue dans son état de retenue, maintiendra la contre-platine en position. Ce mode de fixation est particulièrement efficace et ne demande pas l'exercice d'efforts très élevés. L'espacement des butées assure une longueur de maintien importante qui favorise naturellement le maintien précis en position des deux éléments l'un par rapport à l'autre. Les butées constituent en outre des obstacles positifs aux déplacements relatifs de la contre-platine et de la platine. L'agencement de la première butée directement sur la boucle entourant l'axe de rotation permet également de conserver une longueur contenue de la platine.

De préférence, la boucle formant la première butée présente une ouverture recevant une portion d'extrémité de la contre-platine pour s'opposer à un déplacement de ladite portion d'extrémité perpendiculairement à elle-même.

Ceci permet de renforcer le maintien de la contre-platine sur la platine. Lorsque l'ensemble platine et contre-platine est utilisé pour fixer une branche à un tenon, l'ouverture recevant la portion d'extrémité de la contre-platine pour s'opposer au déplacement de ladite portion d'extrémité perpendiculairement à elle-même permet au clipage de résister à un mouvement d'ouverture de la branche au-delà de sa position maximale d'ouverture.

Avantageusement alors, la contre-platine présente, au moins localement au voisinage de ladite portion d'extrémité, une épaisseur suffisante pour prendre appui sur la portion de boucle formant la première butée de manière à maintenir ladite portion d'extrémité de la contre-platine à distance de l'axe d'articulation et, de préférence, la contre-platine comprend un bossage d'appui sur la portion de boucle formant la première butée.

Ceci permet d'éviter que ladite portion d'extrémité de la contre-platine vienne en contact avec l'axe de rotation et entraver le fonctionnement de la charnière formée par l'axe de rotation. De préférence, ladite portion d'extrémité de la contre-platine comporte un évidement à l'opposé du bossage de telle manière là-aussi à éviter tout risque d'interférence de la contre-platine avec l'axe d'articulation.

Selon un mode de fabrication particulier, les butées et la platine appartiennent à une même pièce métallique.

Les butées et la platines forment ainsi un ensemble unitaire.

De préférence alors, les butées sont obtenues par découpage et déformation plastique de la pièce métallique.

Ce mode de fabrication est particulièrement économique.

Avantageusement, la deuxième butée est formée par une boucle ayant une portion d'extrémité libre pour venir en appui de la contre-platine.

La formation d'une boucle permet un meilleur réglage de l'effort élastique exercé par la deuxième butée et l'obtention d'une forme adaptée pour présenter d'un côté une surface de came facilitant la déformation de la deuxième butée vers son état de libération pour la mise en place de la contre-platine et de l'autre côté une surface franche pour s'opposer au dégagement de la contre-platine sans une manipulation extérieure de la deuxième butée pour l'amener depuis l'état de retenue vers l'état de libération.

De préférence alors, la contre-platine comprend au moins localement une épaisseur suffisante empêchant un engagement de la contre-platine dans la boucle formant la première butée et, avantageusement, la contre-platine comprend un bossage d'appui contre la portion d'extrémité libre empêchant un engagement de la contre-platine dans la boucle formant la deuxième butée.

Le bossage permet d'éviter que la contre-platine échappe à la deuxième butée en pénétrant dans la boucle la formant, ce qui risquerait d'entraîner des difficultés de retrait de la contre-platine et une déformation plastique de la boucle modifiant les caractéristiques du clipage.

Avantageusement, le premier élément est le tenon et le deuxième élément est la branche.

Cet agencement facilite les opérations de montage et démontage de la branche.

Selon un mode de réalisation particulier, le tenon comporte une première partie et une deuxième partie reliées par une charnière comportant l'axe d'articulation, la première partie comportant des moyens de sa fixation à un verre et la deuxième partie portant les butées et la platine.

Selon un mode de réalisation particulier, la contre-platine est engagée à force dans un logement du deuxième élément et, avantageusement, la contre-platine comprend un organe de harponnage pour s'opposer à son retrait hors du logement.

Le mode de clipage de l'invention peut de la sorte être utilisé avec tout type de deuxième élément, en particulier lorsque le deuxième élément forme la branche. Il est alors possible de réaliser un clipage de branche en matière plastique dont les propriétés mécaniques n'auraient pas permis la réalisation du clipage.

Selon un autre mode de réalisation particulier, la contre platine est en une seule pièce avec le deuxième élément.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en perspective d'une paire de lunettes équipées de montures conformes à un premier mode de réalisation de l'invention ;
- la figure 2 est une vue analogue à la figure de cette même paire de lunettes, une des branches ayant été ôtée ;
- la figure 3 est une vue partielle de dessus de la paire de lunette de la figure 1 ;
- la figure 4 est une vue analogue à la figure 3 de la paire de lunette de la figure 2 ;
- les figures 5 et 6 illustrent respectivement le montage et le démontage d'une branche en vue de dessus ;
- la figure 7 est une vue en perspective d'une paire de lunettes équipées de montures conformes à un deuxième mode de réalisation de l'invention ;
- la figure 8 est une vue de détail de la zone VIII de la figure 7 ;
- la figure 9 est une vue en perspective d'une branche de la monture selon le deuxième mode de réalisation ;
- la figure 10 est une vue en perspective de la contre-platine montée sur le tenon de la monture selon 1 deuxième mode de réalisation ;
- la figure 11 est une vue partielle en perspective de la monture selon le deuxième mode de réalisation, avec un écorché.

En référence aux figures, il est visible une paire de lunettes 1 comprenant deux verres 2 équipés d'une monture. La monture comprend un pontet 3 reliant les deux verres 2 l'un à l'autre et deux montures latérales 4.A, 4.B reliées respectivement au verre droit et au verre gauche.

Les montures 4.A et 4.B ont une structure identique sauf en ce que l'une est le symétrique de l'autre par rapport à un plan médian de la paire de lunettes. Dans la suite de la description, ne sera mentionnée qu'une monture 4 renvoyant indifféremment à l'une ou l'autre monture latérale 4A, 4B. Les éléments composant chacune des montures 4A et 4B porteront la même référence numérique.

Chaque monture latérale 4 comprend un premier élément et un deuxième élément clipés l'un sur l'autre. Dans les modes de réalisation décrits, le premier élément est un tenon 10 et le deuxième élément est une branche 30.

Le tenon 10 comporte une première partie 11 et une deuxième partie 12 reliées par une charnière 13 comportant un axe d'articulation solidaire de la première partie 11.

La première partie 11 comporte des moyens de sa fixation au verre 2, ici une boucle de réception d'une vis engagée dans le verre. Il va de soi que tout mode de fixation du tenon 10 au verre peut-être employé et notamment un cerclage du verre ou un pincement du verre.

La deuxième partie 12 forme une platine ayant une portion d'extrémité 14 qui est enroulée autour de l'axe d'articulation 13 et une portion d'extrémité 15, opposée, également conformée en boucle. Comme cela sera détaillé plus tard, les portions d'extrémité 14, 15 forment respectivement une première butée et une deuxième butée et seront désignées pour plus de commodité butée 14, 15 respectivement. Les butées 14, 15 et la platine 12 appartiennent à une même pièce métallique et sont ici obtenues par découpage et déformation plastique de la pièce métallique.

La branche 30 a une portion d'extrémité pourvue d'une contre-platine 31 et, à l'opposé, une portion d'extrémité recourbée pour venir derrière l'oreille du porteur.

La platine 12 est destinée à s'étendre selon une direction longitudinale de branche 32. Les butées 14, 15 sont en regard et espacées l'une de l'autre selon la direction longitudinale de branche 32 pour recevoir entre elles la contre-platine 31 solidaire de la branche 30.

La butée 15 est élastiquement déformable entre un état de retenue (ou état de repos) de la contre-platine 31 et un état de libération (ou état déformé) de la contre-platine 31.

Dans l'état de retenue de la contre-platine 31, la butée 15, au repos, et la butée 14 sont séparées d'une distance inférieure à la distance séparant les surfaces d'appui correspondantes de la contre-platine 31. Ainsi, lorsque la contre-platine 31 est en position entre les butées 14, 15, la butée 15, du fait de son élasticité, plaque la contre-platine 31 contre la butée 14 et contre la platine 12. Dans l'état de libération de la contre-platine 31, la butée 15, déformée élastiquement, et la butée 14 sont séparées d'une distance supérieure à la distance séparant les surfaces d'appui correspondantes de la contre-platine 31 permettant la mise en place et le retrait de la contre-platine 31.

La surface d'appui de la contre-platine 31 contre la butée 14 est un bord transversal d'extrémité de la contre-platine 31 et la surface d'appui de la contre-platine 31 contre la butée 15 est un bord transversal d'une ouverture 33 ménagée dans la contre-platine 31. On remarque que la contre-platine 31 comprend deux bossages d'appui 34, 35 formés respectivement sur le bord transversal d'extrémité formant la surface d'appui de la contre-platine 31 contre la butée 14 et sur le bord transversal de l'ouverture 33 formant la surface d'appui de la contre-platine 31 contre la butée 15. Les bossages d'appui 34, 35 empêchent la pénétration de la contre-platine 31 dans les boucles dont les portions d'extrémités libres forment les butées 14, 15.

La boucle formant la première butée 14 présente une ouverture 50 recevant des portions d'extrémité 51 de la contre-platine 31 pour s'opposer à un déplacement desdites portions d'extrémité perpendiculairement à la contre-platine 31. Les portions d'extrémité 51 s'étendent de part et d'autre du bossage 34.

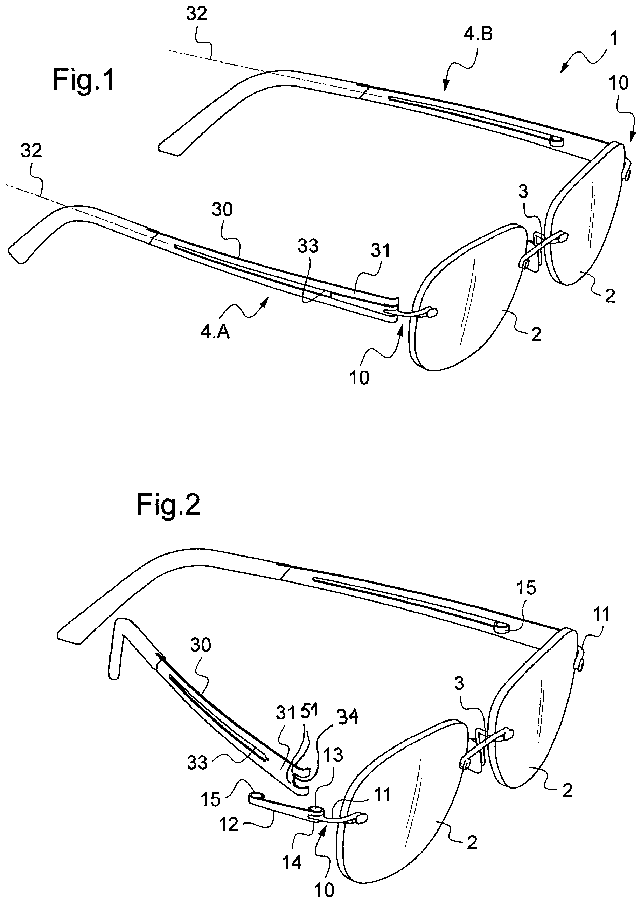

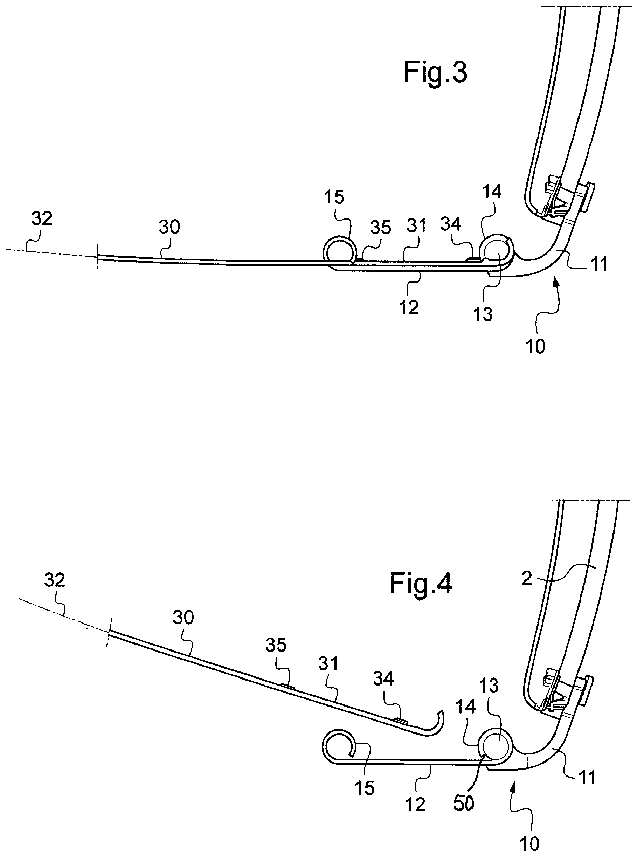

En référence plus particulièrement aux figures 1 à 6, et conformément au premier mode de réalisation, la contre-platine 31 est en une seule pièce avec la branche 30 qui est réalisée par découpage et déformation plastique d'un flan métallique.

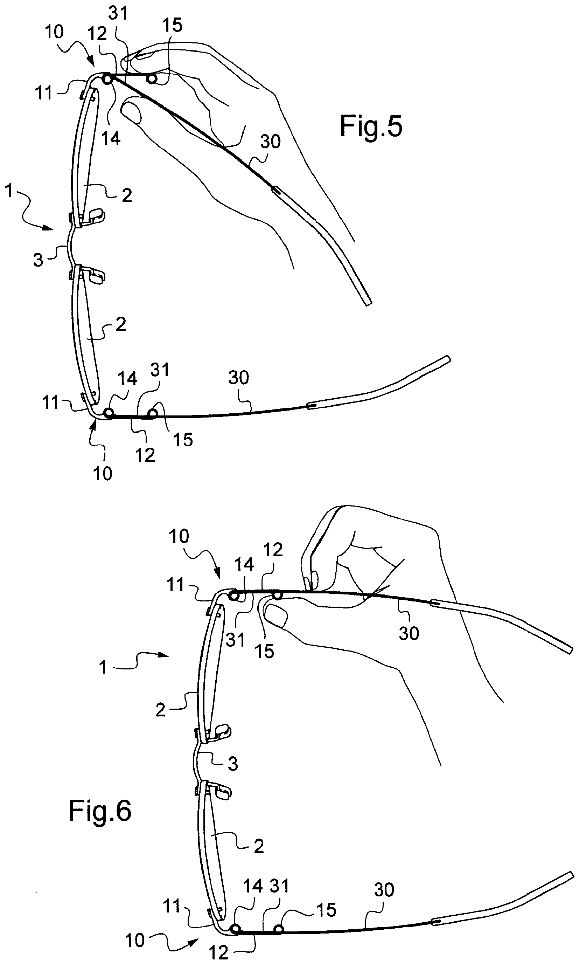

On comprend que la mise en place de la contre-platine 31 sur la platine 12 est réalisée en mettant la contre-platine 31 en butée contre la butée 14 puis en forçant la contre-platine 31 contre la platine 12 en s'opposant à l'effort exercé par la butée 15 qui est dans un premier temps forcé dans son état de libération avant de revenir dans son état de retenue dans lequel la butée 15 maintient la contre-platine 31 en position (figure 5).

Le retrait de la contre-platine 31 est effectué en appuyant directement sur la butée 15 pour chasser celle-ci de l'ouverture 33 en amenant la butée 15 dans son état de libération (figure 6).

On notera que la branche comprend, de part et d'autre des portions 51, deux pattes recourbées s'étendant en saillie de la contre-platine 31 selon la direction longitudinale de la contre-platine 31 et donc de la branche pour venir encadrer les deux extrémités de la charnière.

On notera également que les platines 12 se trouvent à l'extérieur des branches. En cas de mouvement des branches au-delà de leur position maximale d'ouverture, les bords des ouvertures 50 recevant les portions d'extrémité 51 de la contre-platine 31 s'opposent à un déplacement desdites portions d'extrémité 51 perpendiculairement à la contre-platine 31.

Ce positionnement extérieur des platines leur permet éventuellement de servir de support à une ornementation.

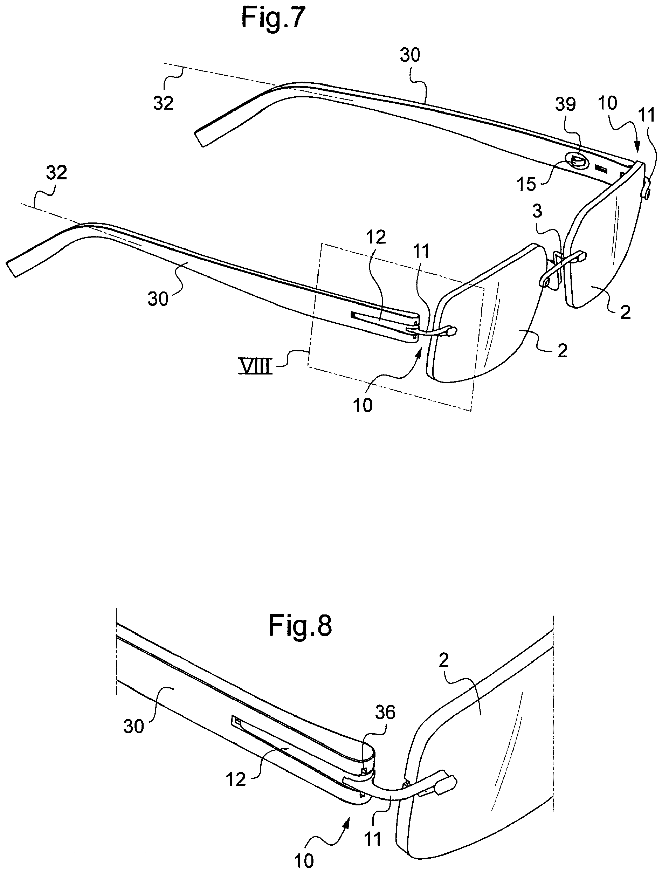

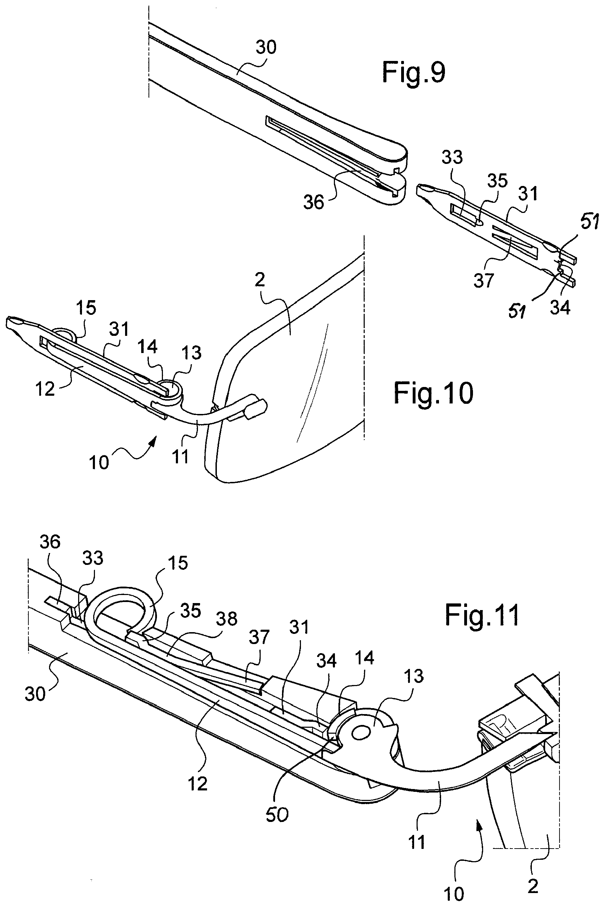

En référence plus particulièrement aux figures 7 à 11, et conformément au deuxième mode de réalisation, la contre-platine 31 forme un insert métallique engagé à force dans un logement d'extrémité 36 de la branche 30 ici en matériau thermoplastique.

Le logement 36 s'étend selon la direction longitudinale de branche depuis la surface terminale de celle-ci voisine de la charnière.

La contre-platine 31 comprend un organe de harponnage 37 formé par une languette s'étendant en saillie de la contre-platine 31. Lorsque la contre-platine 31 est engagée dans le logement 36, l'organe de harponnage s'étend dans un renfoncement 38 du logement 36 pour s'opposer au retrait de la contre-platine 31 hors du logement 36.

La contre-platine est engagée dans la branche 30 avant sa mise en place sur la platine 12.

On note que la butée 15 s'étend en saillie de la branche pour permettre de la dégager de l'ouverture 33 pour libérer la contre-platine 31. Pour faciliter cette opération, la butée 15 débouche dans un évasement 39 formé dans la branche 30.

Bien entendu, l'invention n'est pas limitée aux modes de réalisation décrits mais englobe toute variante entrant dans le champ de l'invention telle que définie par les revendications.

En particulier, les butées 14 et la platine 12 peuvent avoir d'autres formes que celle représentée aux figures. Par exemple, la butée peut prendre une forme triangulaire au lieu d'une forme circulaire.

Les butées 14 et la platine 12, tout comme la contre-platine 31 et les bossages 34, 35 peuvent être formées par usinage d'une pièce massive ou par assemblage par exemple mécano-brasé.

L'invention peut résulter d'une combinaison des modes de réalisation décrits ou d'une inversion cinématique de ceux-ci. Ainsi la contre-platine peut être solidaire du tenon et la platine solidaire de la branche.

Tout ou partie de la charnière peut être d'une seule pièce avec le tenon ou rapportée sur celui-ci par exemple par vissage.

La contre-platine ou la platine peut être réalisée directement dans la branche, quelle que soit le matériau de celle-ci çà partir du moment où le matériau en question présente des caractéristiques mécaniques appropriées.

Le premier élément peut être le tenon et le deuxième élément une partie frontale de la monture, comme celle encerclant les verres.

La contre-platine 31 présente, au moins localement au voisinage de ladite portion d'extrémité, une épaisseur suffisante pour prendre appui sur la portion de boucle formant la première butée de manière à maintenir ladite portion d'extrémité de la contre-platine à distance de l'axe d'articulation. De même, la contre-platine comprend au moins localement une épaisseur suffisante empêchant un engagement de la contre-platine dans la boucle formant la deuxième butée. La contre-platine 31 peut avoir cette épaisseur sur toute sa longueur.

## Revendications

1. Monture de lunettes comprenant au moins un premier élément et un deuxième élément clipés l'un sur l'autre, **caractérisé en ce que** le premier élément comporte une platine (12) pourvue d'une première butée (14) formée d'une portion d'une boucle recevant un axe d'articulation (13) d'une branche de la monture et d'une deuxième butée (15) en regard de la première butée et espacée de cette dernière pour recevoir entre elles une contre-platine (31) solidaire du deuxième élément, la deuxième butée étant formée par une boucle ayant une portion d'extrémité libre pour venir en appui de la contre-platine et étant élastiquement déformable entre :
- un état de retenue de la contre-platine dans lequel la deuxième butée plaque la contre-platine contre la première butée et contre la platine, et
- un état de libération de la contre-platine.

2. Monture selon la revendication 1, dans laquelle la boucle formant la première butée présente une ouverture recevant une portion d'extrémité de la contre-platine pour s'opposer à un déplacement de ladite portion d'extrémité perpendiculairement à elle-même.

3. Monture selon la revendication 2, dans laquelle la contre-platine présente, au moins localement au voisinage de ladite portion d'extrémité, une épaisseur suffisante pour prendre appui sur la portion de boucle formant la première butée de manière à maintenir ladite portion d'extrémité de la contre-platine à distance de l'axe d'articulation.

4. Monture selon la revendication 3, dans laquelle la contre-platine comprend un bossage d'appui sur la portion de boucle formant la première butée.

5. Monture selon la revendication 1, dans laquelle la contre-platine comprend au moins localement une épaisseur suffisante empêchant un engagement de la contre-platine dans la boucle formant la deuxième butée.

6. Monture selon la revendication 5, dans laquelle la contre-platine comprend un bossage d'appui contre la portion d'extrémité libre empêchant un engagement de la contre-platine dans la boucle formant la deuxième butée.

7. Monture selon la revendication 1, dans laquelle les éléments forment pour l'un un tenon et pour l'autre une branche de lunette, la platine et la contre-platine étant destinées à s'étendre selon une direction longitudinale de branche et les butées étant espacées l'une de l'autre selon la direction longitudinale de branche.

8. Monture selon la revendication 1, dans laquelle le premier élément est le tenon et le deuxième élément est la branche.

9. Monture selon la revendication 8, dans laquelle le tenon comporte une première partie et une deuxième partie reliées par une charnière comportant l'axe d'articulation, la première partie comportant des moyens de sa fixation à un verre et la deuxième partie portant les butées et la platine.

10. Monture selon la revendication 8, dans laquelle la contre-platine est engagée à force dans un logement du deuxième élément.

11. Monture selon la revendication 10, dans laquelle le logement s'étend selon la direction longitudinale de branche et la contre-platine comprend un organe de harponnage pour s'opposer à son retrait hors du logement.

12. Monture selon la revendication 8, dans laquelle la contre platine est en une seule pièce avec le deuxième élément.

13. Monture selon la revendication 1, dans laquelle les butées et la platine appartiennent à une même pièce métallique.

14. Monture selon la revendication 13, dans laquelle les butées sont obtenues par découpage et déformation plastique de la pièce métallique.

## Patentansprüche

1. Brillengestell, umfassend mindestens ein erstes Element und ein zweites Element, die aneinander geclippt werden, **dadurch gekennzeichnet, dass** das erste Element eine Platte (12) umfasst, die mit einem ersten Anschlag (14) versehen ist, der von einem Abschnitt einer Windung gebildet ist, welche eine Gelenkverbindungsachse (13) zur Gelenkverbindung eines Bügels des Gestells aufnimmt, sowie mit einem zweiten Anschlag (15), der dem ersten Anschlag entgegengesetzt und zu diesem letztgenannten beabstandet ist, um zwischen ihnen eine Gegenplatte (31) aufzunehmen, die fest mit dem zweiten Element verbunden ist, wobei der zweite Anschlag aus einer Windung gebildet ist, die einen freien Endabschnitt hat, um mit der Gegenplatte in Anlage zu kommen, und die elastisch verformbar ist zwischen:
- einem Haltezustand zum Festhalten der Gegenplatte, in dem der zweite Anschlag die Gegenplatte gegen den ersten Anschlag und gegen die Platte drückt, und
- einem Freigabezustand zur Freigabe der Gegenplatte.

2. Gestell nach Anspruch 1, wobei die den ersten Anschlag bildende Windung eine Öffnung aufweist, die einen Endabschnitt der Gegenplatte aufnimmt, um sich einer Verschiebung des genannten Endabschnittes senkrecht zu derselben zu widersetzen.

3. Gestell nach Anspruch 2, wobei die Gegenplatte zumindest lokal nahe dem Endabschnitt eine Dicke aufweist, die ausreicht, um an dem den ersten Anschlag bildenden Windungsabschnitt zur Anlage zu kommen, derart, dass der genannte Endabschnitt der Gegenplatte auf Abstand zur Gelenkverbindungsachse gehalten wird.

4. Gestell nach Anspruch 3, wobei die Gegenplatte einen Auflagevorsprung an dem den ersten Anschlag bildenden Windungsabschnitt umfasst.

5. Gestell nach Anspruch 1, wobei die Gegenplatte zumindest lokal eine Dicke umfasst, die ausreicht, um einen Eingriff der Gegenplatte mit der den zweiten Anschlag bildenden Windung zu verhindern.

6. Gestell nach Anspruch 5, wobei die Gegenplatte einen Auflagevorsprung zur Auflage an dem freien Endabschnitt hat, der einen Eingriff der Gegenplatte mit der den zweiten Anschlag bildenden Windung verhindert.

7. Gestell nach Anspruch 1, wobei die Elemente zum einen eine Backe und zum anderen einen Brillenbügel bilden, wobei die Platte und die Gegenplatte dazu bestimmt sind, sich in Längsrichtung des Bügels zu erstrecken, und die Anschläge zueinander in der Längsrichtung des Bügels beabstandet sind.

8. Gestell nach Anspruch 1, wobei das erste Element die Backe und das zweite Element der Bügel ist.

9. Gestell nach Anspruch 8, wobei die Backe einen ersten Teil und einen zweiten Teil umfasst, die über ein Scharnier verbunden sind, das die Gelenkverbindungsachse umfasst, wobei der erste Teil Mittel für seine Befestigung an einem Glas und der zweite Teil die Anschläge und die Platte trägt.

10. Gestell nach Anspruch 8, wobei die Gegenplatte mit Kraft in eine Aufnahme des zweiten Elements gedrückt ist.

11. Gestell nach Anspruch 10, wobei sich die Aufnahme in der Längsrichtung des Bügels erstreckt und die Gegenplatte ein Hakenelement umfasst, um sich ihrem Herausziehen aus der Aufnahme zu widersetzen.

12. Gestell nach Anspruch 8, wobei die Gegenplatte einstückig mit dem zweiten Element ausgebildet ist.

13. Gestell nach Anspruch 1, wobei die Anschläge und die Platte zu ein und demselben Metallteil gehören.

14. Gestell nach Anspruch 13, wobei die Anschläge durch Schneiden und plastische Verformung des Metallteils erhalten werden.

## Claims

1. A spectacle frame including at least a first element and a second element that are clipped together, the frame being **characterized in that** the first element includes a plate (12) having a first abutment (14) formed by a portion of a loop that receives a hinge pin (13) of a temple of the frame, and a second abutment (15) facing the first abutment and spaced apart therefrom to receive between them a sideplate (31) secure with said second element, the second abutment being formed by a loop having an end portion that is free to come to bear against the sideplate and being elastically deformable between:
· a sideplate retaining state in which the second abutment presses the sideplate against the first abutment and against the plate; and
· a sideplate releasing state.

2. A frame according to claim 1, wherein the loop forming the first abutment presents an opening receiving an end portion of the sideplate to oppose movement of said end portion perpendicularly to the sideplate.

3. A frame according to claim 2, wherein the sideplate presents, at least locally in the vicinity of said end portion, thickness that is sufficient to bear against the loop portion forming the first abutment so as to hold said end portion of the sideplate at a distance from the hinge pin.

4. A frame according to claim 3, wherein the sideplate includes a boss bearing against the loop portion forming the first abutment.

5. A frame according to claim 1, wherein the sideplate includes at least locally sufficient thickness to prevent the sideplate engaging in the loop forming the second abutment.

6. A frame according to claim 5, wherein the sideplate includes a boss bearing against the free end portion, preventing the sideplate engaging in the loop forming the second abutment.

7. A frame according to claim 1, wherein one of the elements forms a hinge-strap and the other forms a temple of the spectacles, the plate and the sideplate are designed to extend in a temple longitudinal direction, and the abutments are spaced apart from each other in the longitudinal temple direction.

8. A frame according to claim 1, wherein the first element is the hinge-strap and the second element is the temple.

9. A frame according to claim 8, wherein the hinge-strap has a first portion and a second portion that are connected together by a hinge including the hinge pin, the first portion including means for fastening it to a lens and the second portion carrying the abutments and the plate.

10. A frame according to claim 8, wherein the sideplate is engaged as a force-fit in a housing in the second element.

11. A frame according to claim 10, wherein the housing extends in the temple longitudinal direction and the sideplate includes a barb member for opposing withdrawal of the sideplate from the housing.

12. A frame according to claim 8, wherein the sideplate is integral with the second element.

13. A frame according to claim 1, wherein the abutments and the plate belong to a single metal part.

14. A frame according to claim 13, wherein the abutments are obtained by being cut out from the metal part and deformed plastically.
